# EUROPÄISCHE PATENTSCHRIFT

(11) **EP 4 080 041 B1**
(45) Veröffentlichungstag und Bekanntmachung des Hinweises auf die Patenterteilung: **05.11.2025**
(21) Anmeldenummer: 21169135.7
(22) Anmeldetag: 19.04.2021
(51) Int. Cl.: F03D 7/02, F03D 7/04

(54) **VERFAHREN ZUM STEUERN EINER WINDENERGIEANLAGE MIT EINER LEITSTELLE SOWIE LEITSTELLE UND SYSTEM DAFÜR**
METHOD FOR CONTROLLING A WIND POWER SYSTEM WITH A CONTROL POINT AND CONTROL POINT AND SYSTEM FOR SAME
PROCÉDÉ DE COMMANDE D'UNE ÉOLIENNE DOTÉE D'UN POSTE DE COMMANDE ET POSTE DE COMMANDE ET SYSTÈME ASSOCIÉS

(43) Veröffentlichungstag der Anmeldung: 26.10.2022
(73) Patentinhaber: Wobben Properties GmbH, 26607 Aurich (DE)
(72) Erfinder: Poolmann, Alexander, 26632 Ihlow (DE)
(74) Vertreter: Eisenführ Speiser

(56) Entgegenhaltungen:
- EP-A1- 3 792 485
- DE-A1- 102018 131 188

## Beschreibung

Die Erfindung betrifft den Bereich der Steuerung von Windenergieanlagen. Bekannte Steuersysteme von Windenergieanlagen ermöglichen einer Vielzahl von zugriffsberechtigten Akteuren eine Beeinflussung der Steuerung einer Windenergieanlage. Durch Konfiguration an der Windenergieanlage oder in einem Windpark werden normale Betriebsfunktionen zum Einspeisen von Energie aber auch Sonderfunktionen zum Vogel- und Fledermausschutz in den Anlagen hinterlegt. Ferner sind Zugriffe auf die Windenergieanlage zum aktuellen Zeitpunkt, beispielsweise zur Reduzierung der eingespeisten Leistung durch einen Netzbetreiber oder das Abschalten einer Windenergieanlage für Wartungen vor Ort, von berechtigten Personen erlaubt.

Eine Koordination der Betriebs- und Sonderfunktionen findet üblicherweise nicht statt, so dass beispielsweise durch Serviceeingriffe verursachte Stillstandzeiten zwar möglicherweise angekündigt werden aber zumindest teilweise nicht sinnvoll in den Betriebsablauf einer Windenergieanlage integriert werden. Serviceeingriffe werden nämlich vielmehr basierend auf einer Auslastung oder Verfügbarkeit eines Serviceteams koordiniert.

Ferner ist aufgrund auf der Vielzahl der auf die Windenergieanlage zugreifenden Akteure, der aktuell ausgeführte Modus oder die ausgeführte Funktion der Windenergieanlage meist nur durch Auslesen der Windenergieanlagensteuerung selbst möglich. Eine Verarbeitung kollidierender Steuerzugriffe wird nämlich über eine Priorisierung in der Steuerung der Windenergieanlage selbst vorgenommen, so dass nur durch Auslesen des Betriebszustands genau nachvollzogen werden kann, welche möglicherweise kollidierenden Steuerzugriffe vorliegen und welcher dieser Steuerzugriffe tatsächlich ausgeführt wird. Insbesondere für eine Direktvermarktung der Energie einer Windenergieanlage ist es daher schwer nachvollziehbar, welche Energie für eine Einspeisung in ein Netz zu gegebenen Zeitpunkten zur Verfügung steht.

Das Dokument DE 10 2018 131 188 A1 offenbart das Ansteuern einer Windenergieanlage in Abhängigkeit von einem Signal, das indikativ für eine Höhe einer Vergütung von elektrischer Energie ist. Das Signal wird von einer Windenergieanlage, einem Windparkregler oder einer Leitstelle empfangen und die Windenergieanlage in Abhängigkeit von dem Signal angesteuert. Es ist ferner offenbart, dass in Abhängigkeit vom Signal auch ein Zeitplan hinterlegt werden kann, der zur Erzeugung von Steuersignalen zum Ansteuern der Windenergieanlage dient. Das Dokument EP 3 792 485 A1 offenbart das Empfangen von Steuerbefehlen zum Steuern einer Windenergieanlage und das Festlegen einer Reihenfolge der Steuerbefehle in Abhängigkeit von Prioritäten und Empfangszeitpunkten der empfangenen Steuerbefehle.

Aufgabe der vorliegenden Erfindung ist es daher den Problemen des Standes der Technik zu begegnen. Insbesondere soll die Koordination der Steuerung einer Windenergieanlage beim Zugriff auf die Windenergieanlage durch eine Vielzahl von Akteuren verbessert werden. Zumindest soll eine Alternative zum Stand der Technik gefunden werden.

Hierzu betrifft die Erfindung ein Verfahren nach Anspruch 1.

Gemäß der Erfindung wird ein Steuern einer Windenergieanlage mit Hilfe einer Leitstelle vorgeschlagen. Demnach wird zunächst eine Steueranforderung für die Windenergieanlage durch die Leitstelle empfangen. In der Leitstelle wird dann in Abhängigkeit von der empfangenen Steueranforderung ein Betriebszeitplan für die Windenergieanlage erzeugt oder aktualisiert. Vorzugsweise wird somit im Fall, dass noch kein Betriebszeitplan für die Windenergieanlage in der Leitstelle bereitgestellt ist, ein derartiger Betriebszeitplan erzeugt. Ist in der Leitstelle bereits ein Betriebszeitplan für die Windenergieanlage erzeugt und hinterlegt worden, so wird in Abhängigkeit der empfangenen Steueranforderung, die auch als neue Steueranforderung bezeichnet werden kann, dieser bereits erzeugte Betriebszeitplan für die Windenergieanlage aktualisiert.

Ferner wird der Betriebszeitplan an die Windenergieanlage oder eine die Windenergieanlage steuernde Windparksteuerung durch die Leitstelle gesendet, und die Windenergieanlage dann in Abhängigkeit des übersendeten Betriebszeitplans gesteuert. Ein Steuern umfasst auch ein Regeln oder Einstellen.

Dank dem Verfahren findet eine Koordination von Steueranforderungen für eine Windenergieanlage in einer Leitstelle statt. Steueranforderungen werden nicht in einer Windenergieanlage oder einem Windparkregler verarbeitet. Die Leitstelle kann als zentrale Stelle zum Empfangen von Steueranforderungen einer Vielzahl von mit der Leitstelle verbundenen Windenergieanlagen verwendet werden, um so in Abhängigkeit dieser Steueranforderung koordiniert die Windenergieanlagen zu steuern. Ein Betriebszeitplan, der an eine Windenergieanlage durch die Leitstelle übersendet wird, und von der Windenergieanlage lediglich ausgeführt wird, bringt den weiteren Vorteil, dass dieser in der Leitstelle direkt gespeichert von berechtigten Personen abgerufen werden kann. So kann der genaue Betriebszustand einer Windenergieanlage, in dem sich die Windenergieanlage aktuell befindet abgelesen werden, wobei auch zukünftige Betriebszustände, die im Betriebszeitplan bereits vermerkt sind, eindeutig bestimmbar sind. Ein Eingriff in den Betrieb einer Windenergieanlage kann basierend auf den aus der Leitstelle abrufbaren Betriebszeitplan so koordiniert werden, dass möglicherweise in einen geplanten Betriebszustand der Windenergieanlage nur unwesentlich eingegriffen werden muss. Anhand des Betriebszeitplans ist beispielsweise eine Wartung für einen Zeitraum zu planen, in dem der Betriebszeitplan ohnehin eine Stillstandzeit der Windenergieanlage vorsieht.

Gemäß einer ersten Ausführungsform wird der Betriebszeitplan derart in der Leitstelle erzeugt oder aktualisiert, dass der Betriebszeitplan für einen vorbestimmten, in der Zukunft liegenden Zeitraum, gültig ist. Dieser vorbestimmte, in der Zukunft liegende Zeitraum beträgt vorzugsweise mindestens 8 Stunden, mindestens 12 Stunden oder mindestens 24 Stunden. Gemäß einer weiteren Ausbildung dieser oder einer weiteren Ausführungsform ist jedem Zeitpunkt des in der Zukunft liegenden Zeitraums im Betriebszeitplan zumindest genau eine Betriebsart zugeordnet. Zusätzlich oder alternativ ist jedem Zeitpunkt in dem Zeitraum des Betriebszeitplans eine Einspeiseleistung oder ein Einspeiseleistungsbereich angegeben.

Der Betriebszeitplan gilt somit für einen in der Zukunft liegenden Zeitraum. Fällt demnach eine Kommunikation zwischen der Leitstelle und der Windenergieanlage in diesem in der Zukunft liegenden Zeitraum aus, so kann die Windenergieanlage anhand des Betriebszeitplans eine, zumindest vor der Übertragung des Betriebszeitplans gewünschte, Steuerung ausführen, ohne, dass die Leitstelle einzelne Steueranweisungen ständig an die Windenergieanlage übertragen muss. Eine deterministische Steuerung der Windenergieanlage in dem in der Zukunft liegenden Zeitraum ist daher auch bei Ausfall einer Datenverbindung zwischen der Leitstelle und der Windenergieanlage sichergestellt. Außerdem ist, insbesondere bei einem langen, beispielsweise für 24 Stunden gewählten, Zeitraum, nur eine geringe Datenmenge zwischen der Windenergieanlage und der Leitstelle zu übertragen, da eine Aktualisierung des Betriebszeitplans beispielsweise erst spätestens kurz vor Ablauf des Zeitraums erneut erfolgen muss.

Gemäß einer weiteren Ausführungsform umfasst die Betriebsart zumindest ein Stoppen einer Windenergieanlage einen Betrieb mit einer vorgegebenen Einspeiseleistung und/oder einen Betrieb in Abhängigkeit von Sensorwerten.

Ein Stoppen einer Windenergieanlage umfasst vorzugsweise eine Vogelschutzfunktion oder eine Wartungsfunktion. Das heißt, die Betriebsart umfasst das Stoppen einer Windenergieanlage, bei der also vorzugsweise eine Einspeisung der Leistung, nämlich der Wirk- und/oder auch der Blindleistung auf einen Wert von oder im Bereich von 0 reduziert wird.

Eine Betriebsart der Windenergieanlage mit vorgegebener Einspeiseleistung umfasst eine Vorgabe einer Blindleistung, einer Wirkleistung oder einer Blindleistung und einer Wirkleistung, mit der die Windenergieanlage einspeisen soll. Die Betriebsart umfasst somit also einen Betrieb mit einer vorgegebenen Einspeiseleistung, auf die die Windenergieanlage dann gemäß dem Betriebszeitplan gesteuert oder geregelt wird. Ein derartiger Betrieb mit vorgegebener Einspeiseleistung wird beispielsweise bei einer Direktvermarktungsfunktion oder einer Schallreduzierungsfunktion ausgeführt. Bei der Direktvermarktungsfunktion kann beispielsweise eine Einspeiseleistung genau nach gewünschten Vorgaben eingestellt werden, um so beispielsweise keine Strafzahlungen aufgrund zu viel oder zu wenig eingespeister Leistung vornehmen zu müssen. Weiter ist gemäß einer Schallreduzierungsfunktion beispielsweise ein Betrieb mit einer reduzierten Einspeiseleistung gegenüber einer Einspeiseleistung, die aufgrund vorherrschender Windbedingungen möglich wäre, zur Reduzierung der Schallabstrahlung vorgesehen.

Ferner umfasst eine Betriebsart einen Betrieb in Abhängigkeit von Sensorwerten. Damit ist insbesondere eine Fledermausschutzfunktion umfasst. Das heißt, dass beispielsweise ein Betrieb mit einer vorgegebenen maximal möglichen Einspeiseleistung vorgegeben wird. In Abhängigkeit von Sensorwerten, nämlich, wenn durch Sensoren erfasste Bedingungen vorliegen, kann in Abhängigkeit der Sensorwerte, die Einspeiseleistung reduziert werden. Im Fall des Fledermausschutzes ist beispielsweise vorgeschrieben, dass dieser aktiviert werden muss, wenn eine Windgeschwindigkeit unterhalb von 6 m/s liegt und die Außentemperatur, zum Beispiel die Gondeltemperatur, oberhalb von 10 °C liegt. Werden diese Werte erreicht, so schaltet die Windenergieanlage in Abhängigkeit dieser Betriebsart die Einspeisung ab oder reduziert diese. Dies kann beispielsweise erfolgen, in dem die Windenergieanlage sich in einen Trudelbetrieb begibt oder die Rotorblätter in Fahnenstellung stellt, um so die Drehzahl der Rotorblätter zu reduzieren und keine Energie mehr ins Netz einzuspeisen.

Demnach ist also auch eine Betriebsart vorgesehen, bei der der Betrieb mit einem vorgegebenen Einspeiseleistungsbereich, der von einer maximal vorgegebenen Einspeiseleistung bis zu einer Leistung im Bereich von Null reicht, wobei die Einspeiseleistung im Einspeiseleistungsbereich in Abhängigkeit von den Sensorwerten abgeändert wird.

Gemäß einer weiteren Ausführungsform wird der Betriebsplan in der Leitstelle ferner in Abhängigkeit von gespeicherten Steueranforderungen für die Windenergieanlage, die also zuvor für die Windenergieanlage empfangen wurden, oder in Abhängigkeit von einem gespeicherten Betriebszeitplan für die Windenergieanlage in einem vordefinierten Intervall regelmäßig aktualisiert. Der aktualisierte Betriebszeitplan wird außerdem an die Windenergieanlage nach der Aktualisierung gesendet. Das Intervall, in dem der Betriebszeitplan regelmäßig aktualisiert und an die Windenergieanlage gesendet wird, ist kürzer als der in der Zukunft liegende Zeitraum, für den der Betriebszeitplan gültig ist. Hierdurch wird sichergestellt, dass im Fall eines Ausfalls einer Datenverbindung zwischen der Leitstelle und der Windenergieanlage immer ein Betriebszeitplan für einen möglichst langen, in der Zukunft liegenden Zeitraum Gültigkeit aufweist. Ein Ausfall der Datenverbindung hat somit für eine, durch das Verhältnis von Intervall zu Zeitraum vorgegebenen möglichst langen Zeitdauer keine Auswirkung auf einen individuell vorgegebenen Betrieb der Windenergieanlage.

Gemäß einer weiteren Ausführungsform werden in der Leistelle im Fall einer empfangenen Steueranforderung für eine weitere Windenergieanlage, die also nicht der zuvor genannten Windenergieanlage entspricht, aber die mit der zuvor genannten Windenergieanlage an einem gemeinsamen Einspeisepunkt in eine Versorgungsnetz einspeist, der Betriebszeitplan der Windenergieanlage, also der zuvor genannten Windenergieanlage, sowie der weiteren Windenergieanlage aktualisiert. Die entsprechenden Betriebszeitpläne werden an die Windenergieanlage, also die zuvor genannte Windenergieanlage, sowie an die weitere Windenergieanlage übersendet.

Wird demnach beispielsweise eine Steueranforderung für eine weitere Windenergieanlage empfangen, die gemäß der Steueranforderung ihren Betrieb beispielsweise für Wartungen reduzieren oder einstellen, also stoppen, soll, so kann die Windenergieanlage, die mit der weiteren Windenergieanlage am gemeinsamen Einspeisepunkt in ein Versorgungsnetz einspeist, wenn dies möglich ist, gemäß diesem Beispiel mit einer vergleichsweise höheren vorgegebenen Einspeiseleistung betrieben werden. Zumindest teilweise kann so der Ausfall der Einspeiseleistung der weiteren Windenergieanlage für den Zeitraum der Wartung kompensiert werden. Diese Koordination wird in der Leistelle durch Erstellen mehrerer Betriebszeitpläne für die verschiedenen Windenergieanlagen sowie Übertragen dieser neuen aktuellen Betriebszeitpläne erreicht, obwohl nur eine neue Steueranforderung empfangen wurde.

Gemäß einer weiteren Ausführungsform umfasst jede Steueranforderung zumindest eine Kennung der Windenergieanlage, an die die Steueranforderung gerichtet ist, eine Betriebsart, die von der Windenergieanlage auszuführen ist und einen Zeitbereich, in dem die Betriebsart auszuführen ist. Somit ist jede Steueranforderung genau in dem Zeitbereich des Zeitraums eines Betriebszeitplans einer Windenergieanlage zuzuordnen. Ein Zeitbereich kann auch einen wiederkehrenden Zeitbereich innerhalb eines Tages, zum Beispiel für eine Schallreduzierungsfunktion, umfassen. Ein Zeitbereich ist vorzugsweise durch eine Startzeit und eine Endzeit, vorzugsweise eine Startuhrzeit und eine Enduhrzeit definiert.

Gemäß einer weiteren Ausführungsform umfasst jede Steueranforderung ferner eine Priorität für die darin enthaltene Betriebsart. Im Fall empfangener und/oder gespeicherter Steueranforderungen für die Windenergieanlage, die unterschiedlichen Betriebsarten entsprechen aber einen gleichen oder sich überschneidenden Zeitbereich aufweisen, wird der Betriebszeitplan für die Windenergieanlage zumindest für den gleichen oder sich überschneidenden Zeitbereich mit der Betriebsart erzeugt oder aktualisiert, die eine vergleichsweise höhere Priorität als die Betriebsart, die eine vergleichsweise niedrigere Priorität aufweist. Ist beispielsweise in einem bestimmten Zeitbereich eine Vogelschutzfunktion durch Vorgaben vorgeschrieben, und ist in dem Zeitraum, in dem diese Vogelschutzfunktion ausgeführt werden soll, schon eine Steueranforderung hinterlegt, die beispielsweise einen Betrieb der Windenergieanlage mit einer vorgegebenen Einspeiseleistung vorsieht, so kann durch Vergabe einer höheren Priorität für die Vogelschutzfunktion als für den Betrieb mit der vorgegebenen Einspeiseleistung erreicht werden, dass die Leistelle automatisch im Betriebszeitplan für den sich überschneidenden Zeitbereich dieser beiden Funktionen, die Vogelschutzfunktion eingetragen wird. Kollisionen von Steueranforderungen kann somit begegnet werden.

Gemäß einer weiteren Ausführungsform wird in der Leistelle in Abhängigkeit von dem Betriebszeitplan für die Windenergieanlage ein kombinierter Betriebszeitplan für die Windenergieanlage und mindestens eine weitere Windenergieanlage erzeugt oder aktualisiert. Der kombinierte Betriebsplan wird in der Leitstelle für einen Abruf bereitgestellt. Der kombinierte Betriebszeitplan kann von einem Energieversorger oder einem Netzbetreiber abgerufen werden, um diesen beispielsweise in Abhängigkeit von diesem koordinierten Betriebszeitplan eine Planung und Regelung des Netzes zu ermöglichen. Beispielsweise kann eine Einspeisung durch Kraftwerke, die Energie durch fossile Brennstoffe erreichen, entsprechend an diesen kombinierten Betriebsplan angepasst werden. Der kombinierte Betriebszeitplan ergibt durch das Zusammenfassen der Betriebszeitpläne mehrerer Windenergieanlagen eine einfachere Übersicht über eine geplante Gesamteinspeiseleistung mehrerer Windenergieanlagen und bietet somit eine übersichtliche Planungshilfe für den Netzbetreiber oder Energieversorger.

Gemäß einer weiteren Ausführungsform wird der kombinierte Betriebsplan für mehrere oder alle Windenergieanlagen eines Windparks oder mehrere oder alle Windenergieanlagen einer Region erstellt. Ein Windpark bezeichnet hier vorzugsweise mehrere Windenergieanlagen, die an einem gemeinsamen Einspeisepunkt einspeisen. Ferner umfasst der kombinierte Betriebszeitplan vorzugsweise eine Gesamteinspeiseleistung oder einen Gesamteinspeiseleistungsbereich für die mehreren oder alle Windenergieanlagen für jeden Zeitpunkt im Zeitraum des kombinierten Betriebsplans. Das heißt, der kombinierte Betriebsplan gibt für jeden Zeitpunkt im Zeitraum des kombinierten Betriebsplans entweder eine erwartete Gesamteinspeiseleistung oder einen Gesamteinspeiseleistungsbereich an, der von allen Windenergieanlagen, für die der weitere Betriebszeitplan erstellt wurde, in das Netz eingespeist wird. So kann für mehrere Windenergieanlagen eines Windparks oder einer Region eine Planung der Netzlast besonders übersichtlich durch den Netzbetreiber erfolgen.

Ein Gesamteinspeiseleistungsbereich wird beispielsweise dann vorgegeben, wenn Unsicherheiten bei einer Wetterprognose eine genaue Gesamteinspeiseleistung zum Zeitpunkt des Erstellens des kombinierten Betriebszeitplans noch nicht möglich machen. Der Netzbetreiber, der möglicherweise eine bessere Wetterprognose vorliegen hat, kann anhand des Gesamteinspeiseleistungsbereichs und der Prognose dann bereits eine wahrscheinlich zutreffende Gesamteinspeiseleistung aus dem kombinierten Betriebszeitplan ablesen.

Gemäß einer weiteren Ausführungsform wird in der Windenergieanlage eine Einspeiseleistung in Abhängigkeit von mindestens einem empfangenen Wert von mindestens einem Sensor der Windenergieanlage oder den aktuellen Wetterbedingungen eingestellt, wenn im Betriebszeitplan ein Einspeiseleistungsbereich vorgegeben ist. Ferner sind in diesem Fall vorzugsweise im Betriebszeitplan auch der oder die Sensoren vorgegeben oder vordefiniert, die zur Regelung der Einspeiseleistung verwendet werden.

Ferner umfasst die Erfindung eine Leitstelle zum Steuern einer Windenergieanlage. Die Leitstelle umfasst eine Schnittstelle zum Empfangen mindestens einer Steueranforderung für die Windenergieanlage. Zudem umfasst die Leitstelle ein Modul zum Erzeugen oder Aktualisieren eines Betriebszeitplans für die Windenergieanlage in Abhängigkeit von der empfangenen Steueranforderung. Eine weitere Schnittstelle der Leitstelle ist vorgesehen, um den Betriebszeitplan an die Windenergieanlage oder eine die Windenergieanlage steuernde Windparksteuerung zu senden.

Gemäß einer Ausführungsform ist die Leitstelle eingerichtet, den Betriebszeitplan in Abhängigkeit von gespeicherten Steueranforderungen oder einem gespeicherten Betriebszeitplan in einem vordefinierten Intervall regelmäßig zu aktualisieren und an die Windenergieanlage oder die Windparksteuerung zu senden. Das Intervall ist hierbei kürzer als der Zeitraum, für den der Betriebszeitplan Gültigkeit aufweist.

Gemäß einer weiteren Ausführungsform der Leistelle wird im Fall einer empfangenen Steueranforderung für eine weitere Windenergieanlage, die mit der Windenergieanlage an einem gemeinsamen Einspeisepunkt in ein Versorgungsnetz einspeist, der Betriebszeitplan der Windenergieanlage sowie der Betriebszeitplan der weiteren Windenergieanlage aktualisiert und die entsprechenden Betriebszeitpläne an die Windenergieanlage sowie die weitere Windenergieanlage übersendet.

Gemäß einer weiteren Ausführungsform ist die Leitstelle eingerichtet, in Abhängigkeit von dem Betriebszeitplan für die Windenergieanlage einen kombinierten Betriebszeitplan für die Windenergieanlage und mindestens eine weitere Windenergieanlage zu erzeugen oder zu aktualisieren. Der kombinierte Betriebsplan wird in der Leitstellt für einen Abruf bereitgestellt. Der kombinierte Betriebszeitplan umfasst hierbei die zusammengefassten Betriebszeitpläne der Windenergieanlage und der weiteren Windenergieanlage.

Ferner umfasst die Erfindung ein System mit einer Leitstelle nach einer der vorgenannten Ausführungsformen und einer mit der Leitstelle über eine Datenverbindung verbindbare Windenergieanlage. Das System ist eingerichtet, das Verfahren nach einer der Ausführungsformen auszuführen.

Eine Leitstelle bezeichnet hier eine übergeordnete Instanz, die zum Datenaustausch mit einer Vielzahl von Windenergieanlagen und Windparks über eine Datenleitung verbindbar ist. Ein Windpark ist hier definiert als ein Zusammenschluss mehrerer Windenergieanlagen, die an einem gemeinsamen Einspeisepunkt einspeisen. Besonders bevorzugt dient die Leistelle zum Übertragen der Betriebszeitpläne an Windenergieanlagen, die regional beabstandet sind, insbesondere um mehr als 100 km, mehr als 200 km oder besonders bevorzugt um mehr als 500 km.

Weitere Ausführungsformen ergeben sich anhand der in den Figuren näher erläuterten Ausführungsbeispiele. Hierbei zeigen:
- Figur 1: eine Windenergieanlage,
- Figur 2: einen Windpark,
- Figur 3: die Schritte des Verfahrens gemäß einem Ausführungsbeispiel,
- Figur 4: ein Ausführungsbeispiel des Systems und
- Figur 5: ein Beispiel für einen Betriebszeitplan.

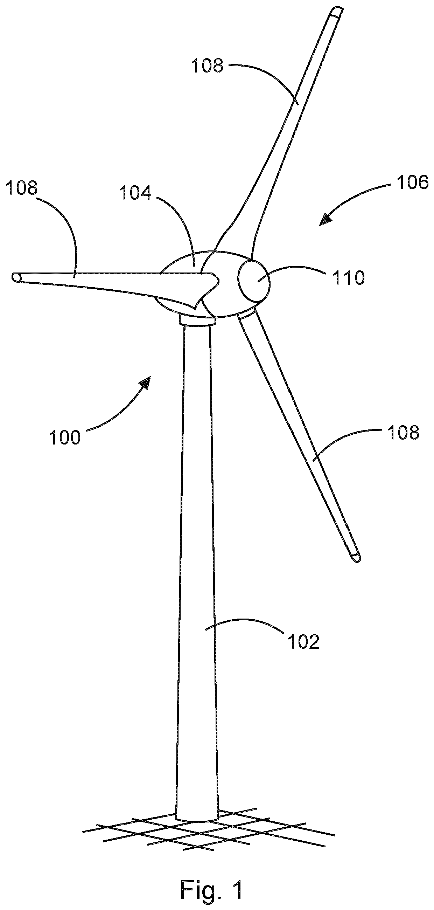

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

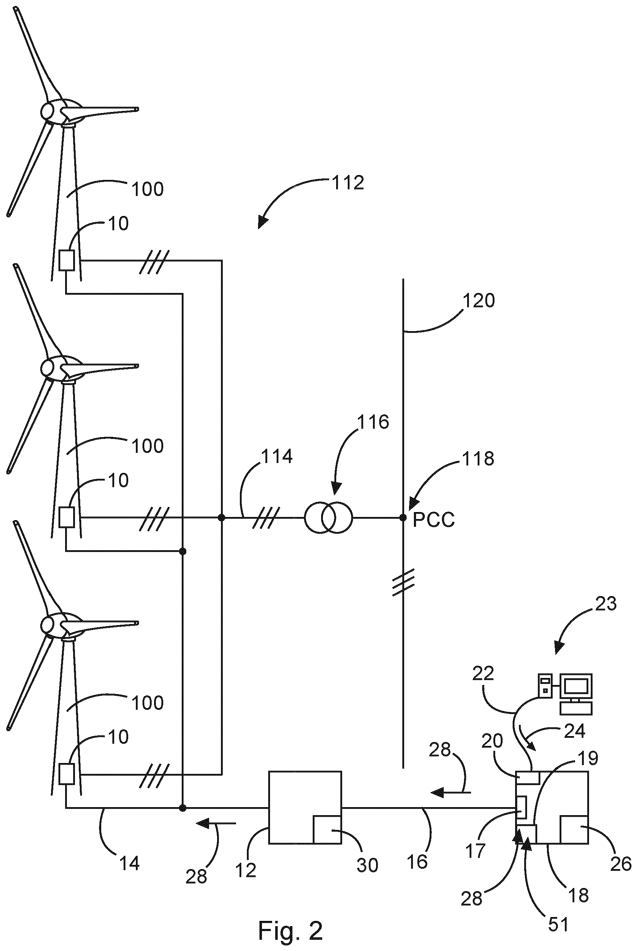

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Jede der Windenergieanlagen 100 weist eine Windenergieanlagensteuerung 10 auf, die zum Steuern und/oder Regeln des Betriebes der Windenergieanlage 100 dient. Die Windenergieanlagensteuerungen 10 sind jeweils mit einer Windparksteuerung 12 des Windparks 112 über eine Datenverbindung 14 verbunden. Die Windparksteuerung 12 ist ferner über eine weitere Datenverbindung 16 mit einer Schnittstelle 17 einer Leitstelle 18 verbunden. Über die Schnittstelle 17 und die Datenverbindung 16 können Daten zwischen der Leitstelle 18 und der Windparksteuerung 12 aber auch direkt mit der Windenergieanlagensteuerung 10 ausgetauscht werden.

Die Leitstelle 18 weist auch eine Schnittstelle 20 auf, mit der die Leitstelle 18 über eine Datenverbindung 22 mit einem Computer 23 verbindbar ist. Mit dem Computer 23 können Steueranforderungen 24 an die Leitstelle 18 übertragen werden, die dann in einem Prozessor 26 der Leitstelle 18 verarbeitet werden, um hieraus Betriebszeitpläne für die Windenergieanlage 100 zu erzeugen. Die Betriebszeitpläne 28 werden dann über die Datenverbindung 16 zur Windparksteuerung 12 übertragen. Von der Windparksteuerung 12 werden die Betriebszeitpläne 28 daraufhin weiter jeweils an eine der Steuerungen 10 der Windenergieanlagen 100 übertragen. Jede der Windenergieanlagen 100 wird durch ihre jeweilige Steuerung 10 basierend auf einem empfangenen, für diese Windenergieanlage individuell erstellten Betriebszeitplan 28 gesteuert und/oder geregelt. Gemäß einer Alternative weist die Windparksteuerung 12 eine Steuerung 30 auf, die einen Betriebszeitplan 28 empfängt und anhand des Betriebszeitplans für eine oder alle Windenergieanlagen 100 eines Windparks 112 selbstständig Einzelbetriebszeitpläne erzeugt, um diese dann an die Windenergieanlagen 100 zu senden oder die Windenergieanlage direkt steuert. Die erstellten Betriebszeitpläne 28, sowie kombinierte Betriebszeitpläne 51, in denen mehrere Betriebszeitpläne 28 kombiniert werden, werden zudem in einem Speicher 19 der Leitstelle 18 gespeichert.

Die Leitstelle 18 ist, auch wenn dies hier nicht dargestellt ist, mit einer Vielzahl weiterer Windparks 112, nämlich deren jeweiligen Windparksteuerung 12 über weitere Datenverbindungen verbunden. Ein Windpark 112 oder jeder der genannten Windparks 112 umfasst gemäß der Definition der Erfindung mehrere Windenergieanlagen, die an einem gemeinsamen Einspeisepunkt 118 des jeweiligen Windparks in ein Versorgungsnetz 120 einspeisen.

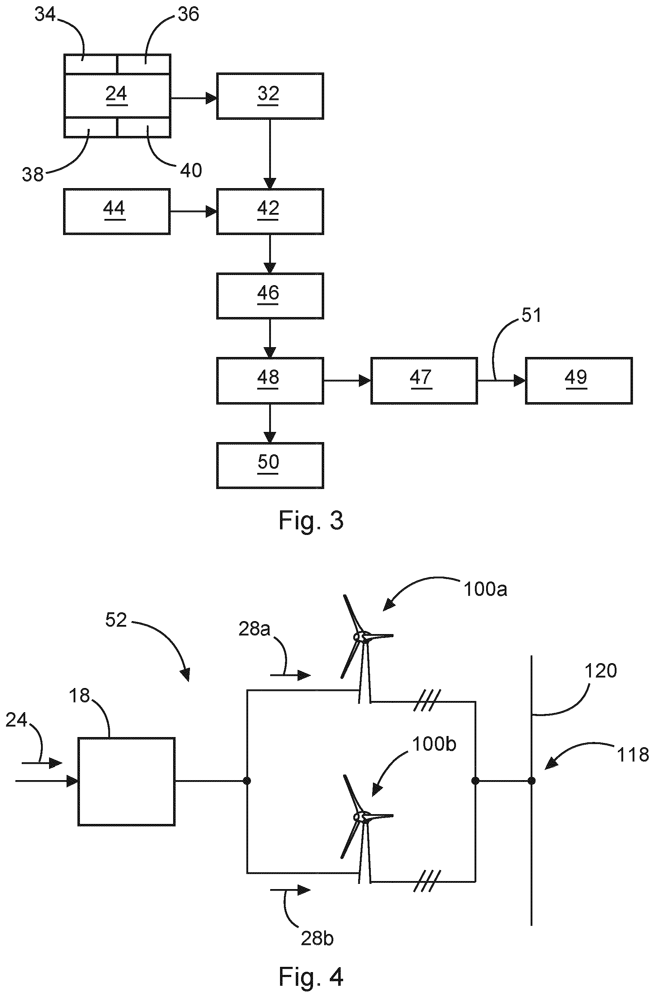

Figur 3 zeigt die Schritte des Verfahrens zum Steuern einer Windenergieanlage 100 gemäß einem Ausführungsbeispiel. In einem Schritt 32 wird eine Steueranforderung 24 für eine Windenergieanlage 100 empfangen. Die Steueranforderung 24 umfasst hier eine Betriebsart 34, eine Kennung 36 der Windenergieanlage 100 und einen Zeitbereich 38, in dem gemäß dieser Steueranforderung 24 die Betriebsart 34 auszuführen ist. Ferner umfasst die Steueranforderung 24 eine Priorität 40, mit der die Steueranforderung 24, nämlich die Betriebsart 34, auszuführen ist.

Zusätzlich zu der empfangenen Steueranforderung 24 werden nach dem Empfangen im Schritt 32 in einem Schritt 42 eine oder mehrere gespeicherte Steueranforderungen 44 für die Windenergieanlage 100, für die die empfangene Steueranforderung 24 vorgesehen ist, aus einem Speicher 19 der Leitstelle abgerufen. Diese gespeicherten Steueranforderungen 44 können auch in Form eines bereits hinterlegten Betriebszeitplans 28 in der Leitstelle 18 vorliegen.

In einem darauffolgenden Schritt 46 wird dann ein Betriebszeitplan für die Windenergieanlage erzeugt, in dem aus der empfangenen Steueranforderung 24 zusammen mit den gespeicherten Steueranforderungen 44 ein neuer Betriebszeitplan 28 für die Windenergieanlage 100 erstellt wird. Im Schritt 48 wird dann der Betriebszeitplan an die Windenergieanlage 100 gesendet. Im Schritt 50 wird daraufhin die Windenergieanlage 100 in Abhängigkeit des Betriebszeitplans 28 gesteuert. Ferner wird in einem Schritt 47 ein kombinierter Betriebszeitplan 51 erzeugt und im Schritt 49 für einen Abruf durch einen Netzbetreiber bereitgestellt.

Figur 4 zeigt ein weiteres Ausführungsbeispiel, bei dem ein System 52 dargestellt ist, das die Leitstelle 18 sowie zwei mit der Leitstelle 18 verbundene Windenergieanlagen 100 aufweist. Die Windenergieanlagen 100 werden im Folgenden als Windenergieanlage 100a und weitere Windenergieanlage 100b bezeichnet. Wird von der Leitstelle 18 eine Steueranforderung 24 empfangen, die für die weitere Windenergieanlage 100b dient, also eine Kennung 36 für die weitere Windenergieanlage 100b aufweist, so werden in der Leitstelle 18 zwei neue Betriebszeitpläne 28a und 28b erzeugt. Im Betriebszeitplan 28b für die weitere Windenergieanlage 100b wird die Steueranforderung 24, die an die weitere Windenergieanlage 100b gerichtet ist, berücksichtigt. Ferner wird jedoch auch der Betriebszeitplan 28a, der für die Windenergieanlage 100a vorgesehen ist, in Abhängigkeit von dieser Steueranforderung 24 aktualisiert. Die Betriebszeitpläne 28a und 28b werden dann an die entsprechenden Windenergieanlagen, nämlich die Windenergieanlage 100a und die weitere Windenergieanlage 100b übertragen. Die Windenergieanlagen 100a und 100b speisen in das gleiche Netz ein, so dass durch Anpassen beider Betriebszeitpläne 28a und 28b berücksichtigt wird, dass eine Änderung der Einspeiseleistung der weiteren Windenergieanlage 100b, die durch die Steueranforderung 24 erhalten wurde, durch die Änderung der Einspeiseleistung der Windenergieanlage 100a kompensiert werden kann, in dem auch der Betriebszeitplan 28a der Windenergieanlage 100a angepasst wird. Beide Windenergieanlagen 100a und 100b, die gemeinsam in das Netz 120 einspeisen, erhalten somit neue Betriebszeitpläne 28.

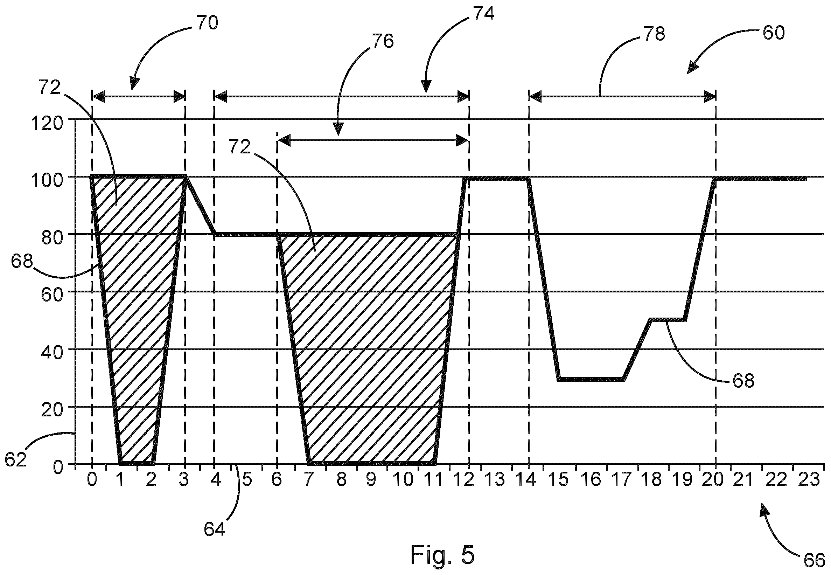

Figur 5 zeigt einen Betriebszeitplan 28 für eine Windenergieanlage 100. Auf der senkrechten Achse 62 sind Werte einer Einspeiseleistung, vorzugsweise für eine Wirkleistung einer Windenergieanlage 100, in Prozent angegeben. Auf der waagerechten Achse 64 wird demgegenüber ein in der Zukunft liegender Zeitraum 66 angegeben, der hier beispielsweise für die nächsten 24 Stunden gilt. Der Verlauf der Einspeiseleistung ist durch die Kurve 68 dargestellt. In einem Zeitbereich 70 wird gemäß diesem Beispiel ein Betrieb in Abhängigkeit von Sensorwerten ausgeführt. Dieser Betrieb umfasst beispielsweise eine Fledermausschutzfunktion. Das heißt, dass die Einspeiseleistung zwischen 100 und 0 % liegen kann, was durch die obere Grenze der Einspeisungsleistung und die untere Grenze der Einspeisungsleistung gekennzeichnet ist. Die Windenergieanlage kann ihre tatsächliche Einspeiseleistung in dem Einspeiseleistungsbereich 72 in Abhängigkeit von Sensorwerten einstellen. Für den Zeitbereich 74 wurde demgegenüber eine Schallreduzierungsfunktion vorgegeben, so dass der Betrieb mit einer vorgegebenen Einspeiseleistung 68 von 80 % vorgegeben ist. Dieser Zeitbereich 74 wird jedoch von einem Zeitbereich 76 überlagert, in dem erneut die Fledermausschutzfunktion ausgeführt werden soll. Somit ergibt sich hier teilweise wieder ein sensorabhängiger Einspeiseleistungsbereich 72, da die Fledermausschutzfunktion eine höhere Priorität als die Schallreduzierungsfunktion aufweist. Im Zeitbereich 78 wird dann eine Direktvermarktungsfunktion ausgeführt, bei der ein Direktvermarkter die gemäß der Kurve verlaufende Einspeiseleistung 68 anfordert. In den übrigen Zeitbereichen des Zeitraums 66 erzeugt die Windenergieanlage 100 % der möglichen Leistung.

## Patentansprüche

1. Verfahren zum Steuern einer Windenergieanlage (100) mit einer Leitstelle (18) umfassend die Schritte:
- Empfangen (32) mindestens einer Steueranforderung (24) für die Windenergieanlage (100) durch eine Leitstelle (18),
- Erzeugen oder Aktualisieren (46) eines Betriebszeitplans (28) für die Windenergieanlage (100) in der Leitstelle (18) in Abhängigkeit von der empfangenen Steueranforderung (24),
- Speichern des Betriebszeitplans (28) in der Leitstelle (18) für einen Abruf durch berechtigte Personen,
- Senden (48) des Betriebszeitplans (24) an die Windenergieanlage (100) oder eine die Windenergieanlage steuernde Windparksteuerung (12) durch die Leistelle (18) und
- Ausführen (50) einer Steuerung der Windenergieanlage (100) in Abhängigkeit des gesendeten Betriebszeitplans (28).

2. Verfahren nach Anspruch 1, wobei der Betriebszeitplan (28) derart erzeugt oder aktualisiert wird, dass dieser für einen vorbestimmten, in der Zukunft liegenden Zeitraum (66), vorzugsweise mindestens für die nächsten 8 Stunden, mindestens für die nächsten 12 Stunden oder mindestens für die nächsten 24 Stunden, gültig ist, derart, dass jedem Zeitpunkt in dem in der Zukunft liegenden Zeitraum (66) zumindest genau eine Betriebsart (34) zugeordnet ist und/oder
wobei der Betriebszeitplan (28) für jeden Zeitpunkt in einem vorbestimmten, in der Zukunft liegenden Zeitraum (66) eine Einspeiseleistung (80) oder einen Einspeiseleistungsbereich (72) angibt.

3. Verfahren nach Anspruch 1 oder 2, wobei eine Betriebsart (34) mindestens eines umfasst von:
- Stoppen der Windenergieanlage (100), insbesondere umfassend eine Vogelschutzfunktion oder eine Wartungsfunktion,
- Betrieb der Windenergieanlage mit vorgegebener Einspeiseleistung (80), umfassend insbesondere eine Direktvermarktungsfunktion und/oder eine Schallreduzierungsfunktion,
- Betrieb der Windenergieanlage (100) in Abhängigkeit von Sensorwerten, insbesondere mit vorgegebenem Einspeiseleistungsbereich, umfassend insbesondere eine Fledermausschutzfunktion.

4. Verfahren nach einem der vorhergehenden Ansprüche, wobei der Betriebszeitplan (28) ferner in Abhängigkeit von gespeicherten Steueranforderungen (44) oder in Abhängigkeit von einem gespeicherten Betriebszeitplan in einem vordefinierten Intervall regelmäßig aktualisiert und an die Windenergieanlage gesendet wird (48), wobei das Intervall kürzer als der in der Zukunft liegende Zeitraum (66) ist, für den der Betriebszeitplan (28) gültig ist.

5. Verfahren nach einem der vorhergehenden Ansprüche, wobei im Fall einer empfangenen Steueranforderung (24) für eine weitere Windenergieanlage (100b) die mit der Windenergieanlage (100a) an einem gemeinsamen Einspeisepunkt (118) in ein Versorgungsnetz (120) einspeist, der Betriebszeitplan (28a) der Windenergieanlage (100a) sowie der Betriebszeitplan (28b) der weiteren Windenergieanlage (100b) aktualisiert und die entsprechenden Betriebszeitpläne (28a, 28b) an die Windenergieanlage (100a) sowie die weitere Windenergieanlage (100b) gesendet werden.

6. Verfahren nach einem der vorherigen Ansprüche, wobei jede Steueranforderung (24) zumindest eine Kennung der Windenergieanlage (36), eine Betriebsart (34), die von der Windenergieanlage (100) auszuführen ist, und einen Zeitbereich (38), in dem die Betriebsart (36) auszuführen ist, umfasst.

7. Verfahren nach Anspruch 6, wobei jede Steueranforderung (24) ferner eine Priorität (40) für die enthaltene Betriebsart (36) aufweist, und wobei im Fall empfangener und/oder gespeicherter Steueranforderungen (24, 44) für die Windenergieanlage (100), die unterschiedliche Betriebsarten (34) für die Windenergieanlage (100) aber einen gleichen oder sich überschneidenden Zeitbereich (70, 74, 76, 78) aufweisen, der Betriebszeitplan (28) für die Windenergieanlage (100) für den gleichen oder sich überschneidenden Zeitbereich (70, 74, 76, 78) mit der Betriebsart erzeugt oder aktualisiert wird, die eine höhere Priorität (40) als die andere Betriebsart (36) aufweist.

8. Verfahren nach einem der vorhergehenden Ansprüche, wobei in der Leitstelle (18) in Abhängigkeit von dem Betriebszeitplan (28) für die Windenergieanlage (100) ein kombinierter Betriebszeitplan (51) für die Windenergieanlage (100) und mindestens eine weitere Windenergieanlage (100) erzeugt oder aktualisiert wird, wobei der kombinierte Betriebszeitplan (51) in der Leitstelle (18) für einen Abruf bereitgestellt wird.

9. Verfahren nach Anspruch 8, wobei der kombinierte Betriebszeitplan (51) für mehrere oder alle Windenergieanlagen (100) eines Windparks (114) oder mehrere oder alle Windenergieanlagen (100) einer Region erstellt wird, wobei der kombinierte Betriebszeitplan vorzugsweise eine Gesamteinspeiseleistung oder einen Gesamteinspeiseleistungsbereich für die mehreren oder alle Windenergieanlagen, für die der kombinierte Betriebszeitplan erstellt wird, für jeden Zeitpunkt im Zeitraum des kombinierten Betriebszeitplans (51) angibt.

10. Verfahren nach einem der vorhergehenden Ansprüche, wobei in der Windenergieanlage (100) eine Einspeiseleistung (80) eines vorgegebenen Einspeiseleistungsbereichs (72) in Abhängigkeit von mindestens einem empfangenen Wert von mindestens einem Sensor der Windenergieanlage oder den aktuellen Windbedingungen eingestellt wird.

11. Leitstelle (18) zum Steuern mindestens einer Windenergieanlage (100) von mehreren mit der Leitstelle über eine Datenverbindung verbundenen Windparks, wobei die Leitstelle umfasst:
- eine Schnittstelle (20) zum Empfangen mindestens einer Steueranforderung (24) für die Windenergieanlage (100),
- ein Modul zum Erzeugen oder Aktualisieren eines Betriebszeitplans (28) für die Windenergieanlage (100) in der Leitstelle (18) in Abhängigkeit von der empfangenen Steueranforderung (24),
- eine weitere Schnittstelle (17) zum Senden des Betriebszeitplans (28) an die Windenergieanlage (100) oder eine die Windenergieanlage steuernde Windparksteuerung (12) durch die Leitstelle (18),
wobei die Leitstelle (18) eingerichtet ist, den Betriebszeitplan (28) in der Leitstelle (18) für einen Abruf durch berechtigte Personen zu speichern.

12. Leitstelle (18) nach Anspruch 11, wobei die Leitstelle eingerichtet ist, den Betriebszeitplan (28) ferner in Abhängigkeit von gespeicherten Steueranforderungen (44) oder in Abhängigkeit von einem gespeicherten Betriebszeitplan in einem vordefinierten Intervall regelmäßig zu aktualisieren und an die Windenergieanlage (100) oder die Windparksteuerung (12) zu senden (48), wobei das Intervall kürzer als der in der Zukunft liegende Zeitraum (66) ist, für den der Betriebszeitplan (28) gültig ist.

13. Leitstelle (18) nach Anspruch 11 oder 12, wobei die Leitstelle eingerichtet ist, im Fall einer empfangenen Steueranforderung (24) für eine weitere Windenergieanlage (100b) die mit der Windenergieanlage (100a) an einem gemeinsamen Einspeisepunkt (118) in ein Versorgungsnetz (120) einspeist, den Betriebszeitplan (28a) der Windenergieanlage (100a) sowie den Betriebszeitplan (28b) der weiteren Windenergieanlage (100b) zu aktualisieren und die entsprechenden Betriebszeitpläne (28a, 28b) an die Windenergieanlage (100a) sowie die weitere Windenergieanlage (100b) zu senden.

14. Leitstelle (18) nach einem der Ansprüche 11 bis 13, wobei die Leitstelle eingerichtet ist, um in Abhängigkeit von dem Betriebszeitplan (28) für die Windenergieanlage (100) einen kombinierten Betriebszeitplan (51) für die Windenergieanlage (100) und mindestens eine weitere Windenergieanlage (100) zu erzeugen oder zu aktualisieren, und um den kombinierten Betriebszeitplan (51) in der Leitstelle (18) für einen Abruf bereitzustellen.

15. System mit einer Leitstelle (18), insbesondere einer Leitstelle nach einem der Ansprüche 11 bis 14 und mindestens einer mit der Leitstelle (18) verbundenen Windenergieanlage (100), das eingerichtet ist, das Verfahren nach einem der Ansprüche 1 bis 10 auszuführen.

## Claims

1. Method for controlling a wind turbine (100) with a control center (18), comprising the steps:
- receiving (32) at least one control request (24) for the wind turbine (100) by a control center (18),
- generating or updating (46) an operating schedule (28) for the wind turbine (100) in the control center (18) depending on the received control request (24),
- storing the operating schedule (28) in the control center (18) for retrieval by authorized persons,
- sending (48) the operating schedule (24) to the wind turbine (100) or a wind farm control system (12) controlling the wind turbine by the control center (18), and
- executing (50) a control of the wind turbine (100) depending on the transmitted operating schedule (28).

2. Method according to claim 1, wherein the operating schedule (28) is generated or updated in such a way that it is valid for a predetermined future period of time (66), preferably at least for the next 8 hours, at least for the next 12 hours or at least for the next 24 hours, such that at least one operating mode (34) is assigned to each point in time in the future period of time (66) and/or
wherein the operating schedule (28) specifies a feed-in power (80) or a feed-in power range (72) for each point in time in a predetermined future period of time (66).

3. Method according to claim 1 or 2, wherein an operating mode (34) comprises at least one of:
- stopping the wind turbine (100), in particular comprising a bird protection function or a maintenance function,
- operating the wind turbine with a specified feed-in power (80), in particular comprising a direct marketing function and/or a noise reduction function,
- operating the wind turbine (100) depending on sensor values, in particular with a specified feed-in power range, in particular comprising a bat protection function.

4. Method according to one of the preceding claims, wherein the operating schedule (28) is further updated and sent to the wind turbine (48) regularly in dependence on stored control requests (44) or in dependence on a stored operating schedule at a predefined interval, wherein the interval is shorter than the future period of time (66) for which the operating schedule (28) is valid.

5. Method according to one of the preceding claims, wherein, in the event of a received control request (24) for a further wind turbine (100b) which, together with the wind turbine (100a), feeds into a supply network (120) at a common feed point (118), the operating schedule (28a) of the wind turbine (100a) and the operating schedule (28b) of the additional wind turbine (100b) are updated and the corresponding operating schedules (28a, 28b) are sent to the wind turbine (100a) and the additional wind turbine (100b).

6. Method according to one of the previous claims, wherein each control request (24) comprises at least an identifier of the wind turbine (36), an operating mode (34) to be executed by the wind turbine (100), and a time range (38) in which the operating mode (36) is to be executed.

7. Method according to claim 6, wherein each control request (24) further comprises a priority (40) for the contained operating mode (36), and wherein, in the case of received and/or stored control requests (24, 44) for the wind turbine (100) which have different operating modes (34) for the wind turbine (100) but have the same or overlapping time ranges (70, 74, 76, 78), the operating schedule (28) for the wind turbine (100) is generated or updated for the same or overlapping time range (70, 74, 76, 78) with the operating mode that has a higher priority (40) than the other operating mode (36).

8. Method according to one of the preceding claims, wherein, in the control center (18), depending on the operating schedule (28) for the wind turbine (100), a combined operating schedule (51) is generated or updated for the wind turbine (100) and at least one further wind turbine (100), wherein the combined operating schedule (51) is made available for retrieval in the control center (18).

9. Method according to claim 8, wherein the combined operating schedule (51) is created for several or all wind turbines (100) of a wind farm (114) or for several or all wind turbines (100) in a region, wherein the combined operating schedule preferably specifies a total feed-in power or a total feed-in power range for the several or all wind turbines for which the combined operating schedule is created for each point in time in the period of time of the combined operating schedule (51).

10. Method according to one of the preceding claims, wherein in the wind turbine (100), a feed-in power (80) of a predetermined feed-in power range (72) is set as a function of at least one received value from at least one sensor of the wind turbine or the current wind conditions.

11. Control center (18) for controlling at least one wind turbine (100) from several wind farms connected to the control center via a data connection, wherein the control center comprises:
- an interface (20) for receiving at least one control request (24) for the wind turbine (100),
- a module for generating or updating an operating schedule (28) for the wind turbine (100) in the control center (18) depending on the received control request (24),
- a further interface (17) for transmitting the operating schedule (28) to the wind turbine (100) or to a wind farm control system (12) controlling the wind turbine via the control center (18),
wherein the control center (18) is configured to store the operating schedule (28) in the control center (18) for retrieval by authorized persons.

12. Control center (18) according to claim 11, wherein the control center is configured to further update and to send (48) the operating schedule (28) to the wind turbine (100) or the wind farm control (12) regularly depending on stored control requests (44) or depending on a stored operating schedule in a predefined interval , wherein the interval is shorter than the future period of time (66) for which the operating schedule (28) is valid.

13. Control center (18) according to claim 11 or 12, wherein the control center is configured, in the event of a received control request (24) for a further wind turbine (100b) which, together with the wind turbine (100a), feeds into a supply network (120) at a common feed point (118), to update the operating schedule (28a) of the wind turbine (100a) and the operating schedule (28b) of the additional wind turbine (100b) and to send the corresponding operating schedules (28a, 28b) to the wind turbine (100a) and the other wind turbine (100b).

14. Control center (18) according to one of claims 11 to 13, wherein the control center is configured to generate or update a combined operating schedule (51) for the wind turbine (100) and at least one further wind turbine (100) depending on the operating schedule (28) for the wind turbine (100) and to send the combined operating schedule (51) to the wind turbine (100) and at least one further wind turbine (100), and to make the combined operating schedule (51) available in the control center (18) for retrieval.

15. System with a control center (18), in particular a control center according to one of claims 11 to 14, and at least one wind turbine (100) connected to the control center (18), which is designed to carry out the method according to one of claims 1 to 10.

## Revendications

1. Procédé de commande d'une éolienne (100) avec un poste de commande (18) comprenant les étapes :
- de réception (32) d'au moins une demande de commande (24) pour l'éolienne (100) par un poste de commande (18),
- de génération ou de mise à jour (46) d'un calendrier de fonctionnement (28) pour l'éolienne (100) dans le poste de commande (18) en fonction de la demande de commande (24) reçue,
- de mémorisation du calendrier de fonctionnement (28) dans le poste de commande (18) pour un appel par des personnes autorisées,
- d'envoi (48) du calendrier de fonctionnement (24) à l'éolienne (100), ou à une commande de parc éolien (12) commandant l'éolienne, par le poste de commande (18) et
- d'exécution (50) d'une commande de l'éolienne (100) en fonction du calendrier de fonctionnement (28) envoyé.

2. Procédé selon la revendication 1, dans lequel le calendrier de fonctionnement (28) est généré ou mis à jour de manière à être valide pour une période prédéterminée dans le futur (66), de préférence au moins pendant les 8 heures suivantes, au moins pendant les 12 heures suivantes ou au moins pendant les 24 heures suivantes, de telle manière qu'au moins exactement un mode de fonctionnement (34) est attribué à chaque moment dans la période (66) située dans le futur et/ou
dans lequel le calendrier de fonctionnement (28) indique une puissance d'injection (80) ou une plage de puissance d'injection (72) pour chaque moment dans une période (66) prédéterminée située dans le futur.

3. Procédé selon la revendication 1 ou 2, dans lequel un mode de fonctionnement (34) comprend au moins une :
- de l'arrêt de l'éolienne (100), comprenant en particulier une fonction de protection contre les oiseaux ou une fonction de maintenance,
- de fonctionnement de l'éolienne à une puissance d'injection (80) prédéterminée, comprenant en particulier une fonction de commercialisation directe et/ou une fonction de réduction du bruit,
- de fonctionnement de l'éolienne (100) en fonction de valeurs de capteurs, en particulier avec une plage de puissance d'injection prédéfinie, comprenant en particulier une fonction de protection contre les chauves-souris.

4. Procédé selon l'une quelconque des revendications précédentes, dans lequel le calendrier de fonctionnement (28) est en outre mis à jour régulièrement à un intervalle prédéfini et envoyé (48) à l'éolienne en fonction de demandes de commande enregistrées (44) ou en fonction d'un calendrier de fonctionnement enregistré, dans lequel l'intervalle est plus court que la période située dans le futur (66) pour laquelle le calendrier de fonctionnement (28) est valide.

5. Procédé selon l'une quelconque des revendications précédentes, dans lequel, en cas de réception d'une demande de commande (24) pour une autre éolienne (100b), qui effectue une injection dans un réseau d'alimentation (120) avec l'éolienne (100a) sur un point d'injection commun (118), le calendrier de fonctionnement (28a) de l'éolienne (100a) ainsi que le calendrier de fonctionnement (28b) de l'autre éolienne (100b) sont mis à jour et les calendriers de fonctionnement (28a, 28b) correspondants sont envoyés à l'éolienne (100a) ainsi qu'à l'autre éolienne (100b).

6. Procédé selon l'une quelconque des revendications précédentes, dans lequel chaque demande de commande (24) comprend au moins un identifiant de l'éolienne (36), un mode de fonctionnement (34) à exécuter par l'éolienne (100) et une plage horaire (38) dans laquelle le mode de fonctionnement (36) est à exécuter.

7. Procédé selon la revendication 6, dans lequel chaque demande de commande (24) présente en outre une priorité (40) pour le mode de fonctionnement (36) contenu, et dans lequel, dans le cas de demandes de commande (24, 44) reçues et/ou stockées pour l'éolienne (100), les différents modes de fonctionnement (34) de l'éolienne (100) présentent toutefois une plage de temps (70, 74, 76, 78) identique ou se chevauchant, le calendrier de fonctionnement (28) de l'éolienne (100) est généré ou mis à jour pour la même plage de temps (70, 74, 76, 78) ou se chevauchant avec le mode de fonctionnement qui présente une priorité (40) plus élevée que l'autre mode de fonctionnement (36).

8. Procédé selon l'une quelconque des revendications précédentes, dans lequel un calendrier de fonctionnement combiné (51) pour l'éolienne (100) et au moins une autre éolienne (100) est généré ou mis à jour dans le poste de commande (18) en fonction du calendrier de fonctionnement (28) pour l'éolienne (100), dans lequel le calendrier de fonctionnement combiné (51) est mis à disposition pour un appel dans le poste de commande (18).

9. Procédé selon la revendication 8, dans lequel le calendrier de fonctionnement combiné (51) est établi pour plusieurs ou toutes les éoliennes (100) d'un parc éolien (114) ou plusieurs ou toutes les éoliennes (100) d'une région, dans lequel le calendrier de fonctionnement indique de préférence une puissance d'injection totale ou une plage de puissance d'injection totale pour les plusieurs ou toutes les éoliennes, pour lesquelles le calendrier de fonctionnement combiné est établi, pour chaque moment de la période du calendrier de fonctionnement combiné (51).

10. Procédé selon l'une quelconque des revendications précédentes, dans lequel une puissance d'injection (80) d'une plage de puissance d'injection (72) prédéfinie est réglée dans l'éolienne (100) en fonction d'au moins une valeur reçue d'au moins un capteur de l'éolienne ou des conditions de vent actuelles.

11. Poste de commande (18) de commande d'au moins une éolienne (100) de plusieurs parcs éoliens connectés au poste de commande par une liaison de données, dans lequel le poste de commande comprend :
- une interface (20) de réception d'au moins une demande de commande (24) pour l'éolienne (100),
- un module de génération ou de mise à jour d'un calendrier de fonctionnement (28) de l'éolienne (100) dans le poste de commande (18) en fonction de la demande de commande (24) reçue,
- une autre interface (17) d'envoi du calendrier de fonctionnement (28) à l'éolienne (100) ou une commande de parc éolien (12) commandant l'éolienne par le poste de commande (18),
dans lequel le poste de commande (18) est mis au point pour enregistrer le calendrier de fonctionnement (28) dans le poste de commande (18) pour un appel par des personnes autorisées.

12. Poste de commande (18) selon la revendication 11, dans lequel le poste de commande est mis au point pour mettre à jour régulièrement, à un intervalle prédéfini, le calendrier de fonctionnement (28) en outre en fonction des demandes de commande enregistrées (44) ou en fonction d'un calendrier de fonctionnement enregistré et l'envoyer (48) à l'éolienne (100) ou à la commande de parc éolien (12), dans lequel l'intervalle est plus court que la période située dans le futur (66) pour laquelle le calendrier de fonctionnement (28) est valide.

13. Poste de commande (18) selon la revendication 11 ou 12, dans lequel le poste de commande est mis au point pour mettre à jour le calendrier de fonctionnement (28a) de l'éolienne (100a) ainsi que le calendrier de fonctionnement (28b) de l'autre éolienne (100b) en cas de réception d'une demande de commande (24) pour une autre éolienne (100b), qui effectue une injection dans un réseau d'alimentation (120) avec l'éolienne (100a) sur un point d'injection commun (118) et pour envoyer à l'éolienne (100a) ainsi qu'à l'autre éolienne (100b) les calendriers de fonctionnement (28a, 28b) correspondants.

14. Poste de commande (18) selon l'une quelconque des revendications 11 à 13, dans lequel le poste de commande est mis au point pour générer ou mettre à jour, en fonction du calendrier de fonctionnement (28) pour l'éolienne (100), un calendrier de fonctionnement combiné (51) pour l'éolienne (100) et au moins une autre éolienne (100), et pour mettre à disposition le calendrier de fonctionnement combiné (51) dans le poste de commande (18) pour appel.

15. Système avec un poste de commande (18), en particulier un poste de commande selon l'une quelconque des revendications 11 à 14 et au moins une éolienne (100) reliée au poste de commande (18), lequel est configuré pour exécuter le procédé selon l'une quelconque des revendications 1 à 10.
